# FASCICULE DE BREVET EUROPEEN

(11) **EP 4 124 738 B1**
(45) Date de publication et mention de la délivrance du brevet: **07.08.2024**
(21) Numéro de dépôt: 22179010.8
(22) Date de dépôt: 14.06.2022
(51) Int. Cl.: F02C 7/224, F02K 1/78, F28D 7/08

(54) **ENSEMBLE PROPULSIF POUR AÉRONEF**
ANTRIEBSANORDNUNG FÜR LUFTFAHRZEUG
PROPULSION ASSEMBLY FOR AIRCRAFT

(30) Priorité: 26.07.2021 FR 2108076
(43) Date de publication de la demande: 01.02.2023
(73) Titulaire: AIRBUS OPERATIONS (S.A.S.), 31060 Toulouse (FR); Airbus (S.A.S.), 31700 Blagnac (FR)
(72) Inventeur: CZAPLA, Lionel, 31060 TOULOUSE Cedex 9 (FR); CARRETERO BENIGNOS, Jorge A., 82024 TAUFKIRCHEN (DE)
(74) Mandataire: Sarraméa, Claude

(56) Documents cités:
- EP-A1- 3 623 604
- WO-A1-2014/105327
- KR-B1- 101 287 605
- US-A- 6 092 590

## Description

### DOMAINE TECHNIQUE

La présente invention concerne un ensemble propulsif pour un aéronef, ledit ensemble propulsif comprenant un système de propulsion comportant une tuyère d'éjection assurant l'éjection des gaz de combustion du système de propulsion et un échangeur thermique arrangé au niveau de la tuyère d'éjection pour assurer un transfert de calories vers le carburant du système de propulsion, ainsi qu'un aéronef comportant au moins un tel système de propulsion.

### ÉTAT DE LA TECHNIQUE ANTÉRIEURE

Afin de se déplacer, un aéronef comporte classiquement au moins un ensemble propulsif comprenant un système de propulsion arrangé dans une nacelle et qui peut prendre la forme d'un turboréacteur ou d'un turbopropulseur. Dans chaque cas, le système de propulsion comporte un ensemble rotatif qui entraîne une soufflante ou une hélice. L'ensemble rotatif constitue un noyau du système de propulsion et il comporte de l'avant vers l'arrière une entrée d'air qui permet l'introduction d'air dans une veine du noyau, un compresseur qui comprime l'air ainsi introduit, une chambre de combustion dans laquelle se mélange l'air ainsi comprimé et un carburant, et une turbine qui permet la détente des gaz de combustion et qui génère la rotation qui est transmise à la soufflante ou à l'hélice.

En aval de la turbine, une tuyère d'éjection assure l'éjection des gaz de combustion.

Il est également connu, notamment dans le cas du dihydrogène, que le rendement de la combustion d'un carburant est amélioré si ce carburant est chauffé avant ladite combustion. Il est également connu d'utiliser une partie des gaz de combustion chauds évacués par la tuyère d'éjection pour réchauffer le carburant.

Il est connu du document WO2014/105327 un ensemble moteur à turbine comportant une section de combustion pourvue d'un carter annulaire, et un échangeur de chaleur présentant des passages à proximité des parois internes et externes dudit carter annulaire. Lesdits passages sont agencés autour d'une partie du carter annulaire, et en communication fluidique les uns avec les autres de telle sorte qu'un fluide puisse s'écouler à travers lesdits passages. L'ensemble moteur à turbine comporte également un système de combustible cryogénique, qui comprend un réservoir de combustible cryogénique, et une conduite d'alimentation couplée à l'un desdits passages. Le combustible cryogénique est fourni depuis le réservoir de combustible cryogénique, au moyen de la conduite d'alimentation, aux passages de l'échangeur de chaleur, le combustible cryogénique dans lesdits passages étant chauffé par la section de combustion.

Il est également connu du document EP3623604 un système de moteur à turbine à gaz comprenant un moteur à turbine à gaz et un système de turbine à carburant, qui comporte une turbine à carburant et une pompe à carburant entraînée par la turbine à carburant. Le moteur à turbine à gaz comprend une chambre de combustion et un système d'échange de chaleur, qui est configuré pour transférer l'énergie thermique d'un flux d'air d'admission/d'échappement au carburant pour produire un carburant gazeux qui est utilisé pour entraîner la turbine à carburant et la pompe à carburant, et pour la combustion dans le moteur à turbine à gaz. La turbine à carburant est en communication fluidique avec le système d'échange de chaleur et avec la chambre de combustion, et est configurée pour extraire l'énergie de la détente du combustible gazeux.

Il est aussi connu du document US6092590 un dispositif évaporateur pour évaporer de l'hydrogène à basse température dans un état liquide, qui est partiellement surchauffé dans un premier canal d'écoulement, puis dirigé dans un deuxième canal de retour. Le deuxième canal est notamment interposé entre le premier canal et un passage traversé par un fluide caloporteur, tel qu'un gaz d'échappement chaud. Ainsi, l'hydrogène surchauffé circulant dans le deuxième canal sert de couche intermédiaire pour le transfert de chaleur depuis le fluide caloporteur jusqu'à l'hydrogène à basse température initialement liquide dans le premier canal.

### EXPOSÉ DE L'INVENTION

Un objet de la présente invention est de proposer une autre solution pour réchauffer le carburant avant sa combustion sans prélever les gaz de combustion.

À cet effet, est proposé un ensemble propulsif pour un aéronef comportant :
- une nacelle,
- un système de propulsion arrangé à l'intérieur de la nacelle et comprenant un carénage, une chambre de combustion, et logé dans le carénage, une tuyère d'éjection disposée en aval de la chambre de combustion et délimitée par une portion arrière du carénage, dite paroi de tuyère, et assurant l'éjection des gaz de combustion issus de la combustion du carburant dans la chambre de combustion,
- un réservoir de carburant,
- une canalisation d'apport qui relie le réservoir et la chambre de combustion, et
- un système d'échangeur thermique assurant, en fonctionnement du système de propulsion, un échange de calories entre les gaz chauds de combustion circulant dans la tuyère et le carburant plus froid circulant dans la canalisation d'apport par rayonnement thermique à travers la paroi de tuyère.

Selon l'invention, le système d'échangeur thermique comporte une portion de la canalisation d'apport où ladite portion prend la forme d'un capotage qui est fixé de manière étanche à la paroi de tuyère et sur l'extérieur de celle-ci et où le capotage et la paroi de tuyère définissent entre eux une chambre de chauffe pour le carburant ; le capotage est équipé de plusieurs parois de guidage qui divisent la chambre de chauffe en plusieurs couloirs successifs et communiquant de proche en proche ; et un espace est prévu entre chaque paroi de guidage et la paroi de tuyère.

Avec un tel arrangement, les calories des gaz de combustion sont transférées au carburant pour une meilleure combustion sans prélever de gaz de combustion.

Avantageusement, l'ensemble propulsif comporte des moyens de détection de fuite prévus au niveau de ladite portion, une unité de contrôle connectée aux moyens de détection de fuite et une vanne montée sur la canalisation d'apport en aval de la portion et commandée en ouverture et en fermeture par l'unité de contrôle.

Selon un mode de réalisation particulier, le système d'échangeur thermique comporte une canalisation de circulation dans laquelle circule un fluide caloporteur, une pompe arrangée de manière à mettre en mouvement le fluide caloporteur dans la canalisation de circulation, où une portion de la canalisation de circulation prend la forme d'un capotage qui est fixé de manière étanche à la paroi de tuyère et sur l'extérieur de celle-ci et où le capotage et la paroi de tuyère définissent entre eux une chambre de chauffe pour le fluide caloporteur.

Avantageusement, le capotage est réalisé dans le même matériau que la paroi de tuyère.

Avantageusement, le capotage s'étend sur un secteur angulaire limité autour d'un axe de la paroi de tuyère.

Avantageusement, le capotage s'étend sur tout le pourtour de la paroi de tuyère.

Avantageusement, les parois de guidage sont parallèles à un axe de la paroi de tuyère.

Avantageusement, les parois de guidage sont perpendiculaires à un axe de la paroi de tuyère.

Avantageusement, la paroi de tuyère est équipée de nervures qui s'étendent parallèlement aux parois de guidage et chaque nervure est disposée entre deux parois de guidage consécutives.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un ensemble propulsif selon l'invention,
la Fig. 2 est une représentation schématique vue de côté et en coupe d'un ensemble propulsif selon un premier mode de réalisation de l'invention,
la Fig. 3 est une représentation schématique vue de côté et en coupe d'un ensemble propulsif selon un deuxième mode de réalisation de l'invention,
la Fig. 4 est une vue en perspective d'un système d'échangeur thermique selon un mode de réalisation de l'invention,
la Fig. 5 est une vue en coupe, selon un plan perpendiculaire à l'axe de la tuyère, d'un système d'échangeur thermique selon une variante de réalisation de l'invention,
la Fig. 6 est une vue en coupe, selon un plan perpendiculaire à l'axe de la tuyère, d'un système d'échangeur thermique selon une variante de réalisation de l'invention,
la Fig. 7 est une vue en coupe, selon un plan perpendiculaire à l'axe de la tuyère, d'un système d'échangeur thermique selon une variante de réalisation de l'invention, et
la Fig. 8 est une vue en perspective d'un autre système d'échangeur thermique selon un mode de réalisation de l'invention.

### EXPOSÉ DÉTAILLÉ DE MODES DE RÉALISATION

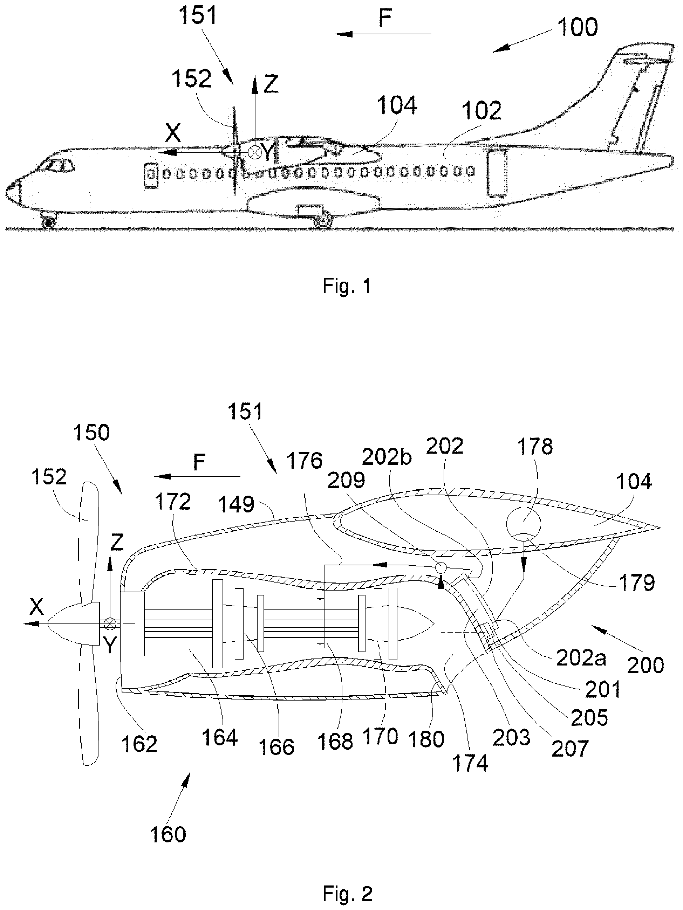

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

La Fig. 1 montre un aéronef 100 qui présente un fuselage 102 de part et d'autre duquel est fixée une aile 104. Sous chaque aile 104 est fixée au moins un ensemble propulsif 151.

La Fig. 2 montre l'ensemble propulsif 151 qui comporte une nacelle 149 et un système de propulsion 150 entouré par la nacelle 149. Dans le mode de réalisation de l'invention présenté ici, chaque système de propulsion 150 prend la forme d'un turbopropulseur avec une hélice 152 entraînée en rotation par un ensemble rotatif monté à l'intérieur d'un carénage 172 du système de propulsion 150 logé à l'intérieur de la nacelle 149, mais chaque système de propulsion 150 peut également prendre la forme d'un turboréacteur entraînant une soufflante. Ainsi, d'une manière générale, le système de propulsion 150 comporte un ensemble rotatif et un élément mobile 152 (hélice ou soufflante). Le carénage 172 est étanche.

Dans la description qui suit, et par convention, on appelle X l'axe longitudinal qui correspond à l'axe de rotation de l'élément mobile 152 orienté positivement dans le sens d'avancement de l'aéronef 100, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

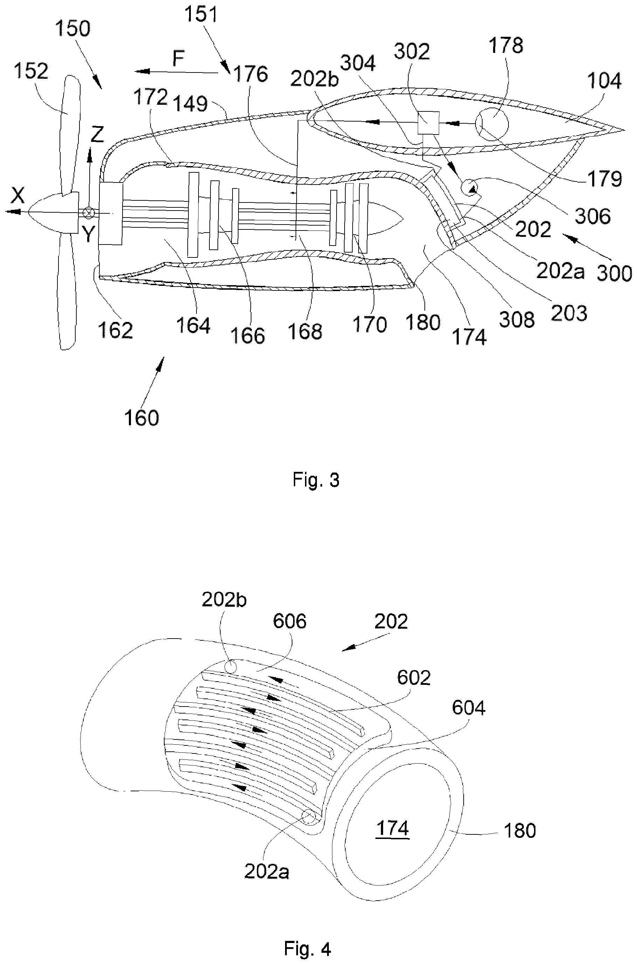

La Fig. 2 et la Fig. 3 montrent le système de propulsion 150 dans le cas d'un turbopropulseur. L'ensemble rotatif 160 constitue un noyau du système de propulsion 150 et il comporte de l'avant vers l'arrière une entrée d'air 162 qui permet l'introduction d'air dans une veine 164 du noyau, un compresseur 166 qui comprime l'air ainsi introduit, une chambre de combustion 168 dans laquelle l'air ainsi comprimé et un carburant se mélangent et brûlent, et une turbine 170 qui permet la détente des gaz de combustion et qui génère la rotation qui est transmise à l'élément mobile ici l'hélice 152. Les éléments de l'ensemble rotatif 160 sont entourés par le carénage 172 formé de carters structuraux montés autour des éléments de l'ensemble rotatif 160 et permettent de le rigidifier afin notamment de limiter ses distorsions en fonctionnement. Dans l'ensemble rotatif, certains éléments de l'ensemble rotatif sont mobiles en rotation autour de l'axe X, tandis que certains éléments de l'ensemble rotatif sont fixes, mais participent à l'entrainement en rotation des éléments rotatifs de l'ensemble rotatif.

Le carénage 172 est d'une part, ouvert à l'avant au niveau de l'entrée d'air 162 et délimite la veine 164 et est, d'autre part, ouvert à l'arrière au niveau d'une tuyère d'éjection 174 qui est en aval de la turbine 170 et donc de la chambre de combustion 168 et assure l'éjection des gaz de combustion issus de la combustion du carburant et de l'air dans la chambre de combustion 168. La partie arrière du carénage 172 qui entoure la tuyère d'éjection 174 forme la paroi de tuyère 180.

L'espace entre la nacelle 149 et le carénage 172 est occupé par divers systèmes permettant d'assurer le fonctionnement du système de propulsion 150. En particulier, afin d'alimenter la chambre de combustion 168 en carburant, l'ensemble propulsif 151 comporte un réservoir de carburant 178 qui est ici logé dans l'aile 104, une canalisation d'apport 176 qui relie le réservoir 178 et la chambre de combustion 168, et une pompe 179 qui met en mouvement le carburant du réservoir 178 jusqu'à la chambre de combustion 168 à travers la canalisation d'apport 176. Le carburant peut être par exemple du kérosène ou du dihydrogène (H₂).

Afin de réchauffer le carburant avant son injection dans la chambre de combustion 168, et ce pour obtenir une meilleure combustion, l'ensemble propulsif 151 comporte également un système d'échangeur thermique 200, qui est arrangé dans l'espace entre la nacelle 149 et le carénage 172, et qui est arrangé, lorsque le système de propulsion 150 est en fonctionnement, pour assurer un échange de calories entre les gaz chauds de combustion circulant dans la tuyère 174 et le carburant plus froid circulant dans la canalisation d'apport 176. Ce transfert de calories s'effectue par rayonnement thermique à travers la paroi de tuyère 180 qui est portée à haute température lors du fonctionnement du système de propulsion 150.

Dans le mode de réalisation de la Fig. 2, le système d'échangeur thermique 200 comporte une portion 201 de la canalisation d'apport 176 où ladite portion 201 est fixée dans l'espace entre la nacelle 149 et le carénage 172 au niveau de la paroi de tuyère 180.

La portion 201 prend la forme d'un capotage 202 qui est fixé de manière étanche à la paroi de tuyère 180 et sur l'extérieur de celle-ci et, le capotage 202 et la paroi de tuyère 180 définissent entre eux une chambre de chauffe 203 pour le carburant. Le capotage 202 est réalisé par exemple par une tôle emboutie/pliée.

Le capotage 202 est équipé d'une connexion d'entrée 202a qui assure le transfert fluidique de l'extérieur du capotage 202 vers la chambre de chauffe 203 et d'une connexion de sortie 202b qui assure le transfert fluidique de la chambre de chauffe 203 vers l'extérieur du capotage 202.

La canalisation d'apport 176 est ainsi divisée en une première partie qui est fluidiquement connectée entre le réservoir 178 et la connexion d'entrée 202a, une deuxième partie qui est fluidiquement connectée entre la connexion de sortie 202b et la chambre de combustion 168, et entre la première partie 202a et la deuxième partie 202b, une partie intermédiaire qui est constituée par le capotage 202 et la chambre de chauffe 203.

Ainsi, le réchauffement du carburant s'effectue directement dans la chambre de chauffe 203 constituant de ce fait une partie de la canalisation d'apport 176.

Pour prévenir une fuite de carburant au niveau de la portion 201, le système d'échangeur thermique 200 comporte des moyens de détection de fuite 205 prévus au niveau de ladite portion 201 et une unité de contrôle 207 connectée aux moyens de détection de fuite 205. Le système d'échangeur thermique 200 comporte également une vanne 209 montée sur la canalisation d'apport 176 en aval de la portion 201 par rapport au sens d'écoulement du carburant et commandée en ouverture et en fermeture par l'unité de contrôle 207. L'unité de contrôle 207 commande la fermeture de la vanne 209 lorsque les moyens de détection de fuite 205 détectent une fuite de carburant.

Dans le mode de réalisation de la Fig. 3, le système d'échangeur thermique 300 comporte une canalisation de circulation 304 dans laquelle circule un fluide caloporteur, une pompe 306 arrangée de manière à mettre en mouvement le fluide caloporteur dans la canalisation de circulation 304, où une portion 308 de la canalisation de circulation 304 est arrangé dans l'espace entre la nacelle 149 et le carénage 172 au niveau de la paroi de tuyère 180.

La portion 308 prend la forme d'un capotage 202 qui est fixé de manière étanche à la paroi de tuyère 180 et sur l'extérieur de celle-ci et, le capotage 202 et la paroi de tuyère 180 définissent entre eux une chambre de chauffe 203 afin d'assurer un transfert de calories des gaz de combustion vers le fluide caloporteur. Le système d'échangeur thermique 300 comporte également un échangeur thermique 302 arrangé entre la canalisation d'apport 176 et la canalisation de circulation 304 de manière à assurer un transfert de calories du fluide caloporteur vers le carburant. Ainsi, le réchauffement du carburant s'effectue indirectement par l'intermédiaire d'un fluide caloporteur.

Comme précédemment, le capotage 202 est équipé d'une connexion d'entrée 202a qui assure le transfert fluidique de l'extérieur du capotage 202 vers la chambre de chauffe 203 et d'une connexion de sortie 202b qui assure le transfert fluidique de la chambre de chauffe 203 vers l'extérieur du capotage 202.

La canalisation de circulation 304 est ainsi divisée en une première partie qui est fluidiquement connectée entre l'échangeur thermique 302 et la connexion d'entrée 202a, une deuxième partie qui est fluidiquement connectée entre la connexion de sortie 202b et l'échangeur thermique 302, et entre la première partie 308a et la deuxième partie 308b, une partie intermédiaire qui est constituée par le capotage 202 et la chambre de chauffe 303.

Dans un cas comme dans l'autre, le capotage 202, 308 est préférentiellement réalisé dans le même matériau que la paroi de tuyère 180 pour avoir des comportements identiques vis-à-vis de la température et ainsi éviter les fuites entre eux.

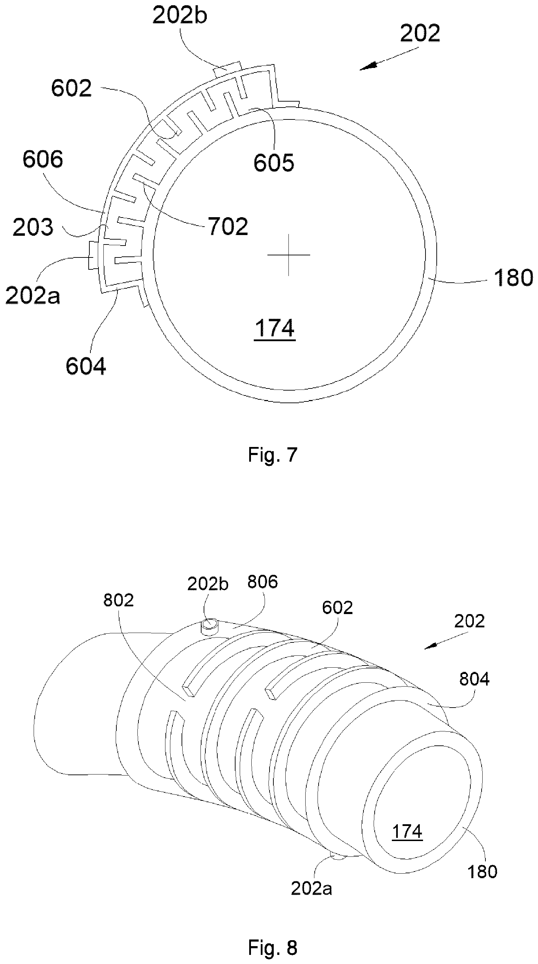

La Fig. 4 et la Fig. 8 montrent des vues en perspective de la paroi de tuyère 180 avec le capotage 202 pour des arrangements qui s'appliquent aussi bien dans le mode de la Fig. 3 que dans le mode de la Fig. 2. Le capotage 202 prend la forme d'une cuvette qui présente un fond 606, 806 et une ouverture qui est plaquée contre la paroi de tuyère 180 dont les bords entourant l'ouverture sont fixés de manière étanche à la paroi de tuyère 180, en particulier par soudage. Le capotage 202 présente des rebords 604, 804 qui s'étendent entre le fond 606, 806 et l'ouverture sur tous les côtés du capotage 202. Le fond 606, 806 est ainsi à distance de la paroi de tuyère 180 pour former la chambre de chauffe 203.

La différence entre ces deux modes de réalisation repose sur l'étendue angulaire du capotage 202 autour de la paroi de tuyère 180. Dans le mode de réalisation de la Fig. 4, le capotage 202 s'étend sur un secteur angulaire limité autour de l'axe de la paroi de tuyère 180, ici de l'ordre de 90°, et dans le mode de réalisation de la Fig. 8, le capotage 202 s'étend sur tout le pourtour de la paroi de tuyère 180, c'est-à-dire 360°.

La connexion d'entrée 202a et la connexion de sortie 202b sont installées au niveau du fond 606, 806 mais d'autres positions sont possibles.

D'une manière générale, pour assurer que le fluide (carburant, fluide caloporteur) se répande le plus possible à l'intérieur du capotage 202, la connexion d'entrée 202a et la connexion de sortie 202b sont les plus éloignées possible.

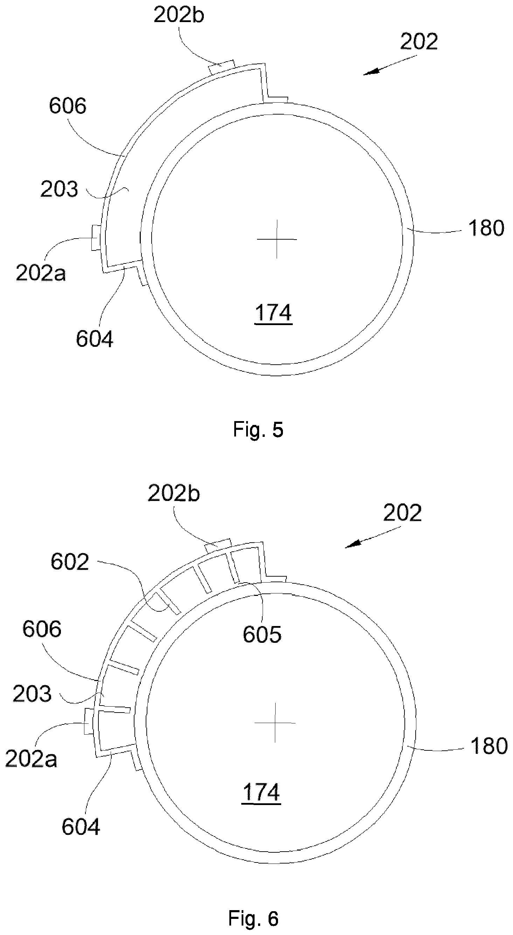

Les Figs. 5 à 7 montrent différents modes de réalisation permettant d'assurer un meilleur transfert de calories en allongeant le temps de parcours du fluide dans le capotage 202. Ces arrangements s'appliquent indifféremment au mode de la Fig. 4 et au mode de la Fig. 8.

Dans le mode de réalisation de la Fig. 5 (non revendiqué), l'intérieur de la chambre de chauffe 203 est complètement ouverte permettant un débit du fluide sans perte de charge.

Dans le mode de réalisation de la Fig. 6, le capotage 202 est équipé de plusieurs parois de guidage 602 qui divisent la chambre de chauffe 203 en plusieurs couloirs successifs et les parois de guidage 602 sont configurées pour assurer une communication fluidique de proche en proche, c'est-à-dire qu'un couloir communique fluidiquement avec ses deux couloirs voisins, pour allonger le temps de parcours du fluide dans le capotage 202. Chaque paroi de guidage 602 s'étend de manière globalement perpendiculairement par rapport au fond 606 formant ainsi une pluralité de murs espacés les uns des autres.

La Fig. 4 montre en transparence un exemple de position des différentes parois de guidage 602 lorsque celles-ci sont parallèles à l'axe de la paroi de tuyère 180.

La Fig. 8 montre en transparence un exemple de position des différentes parois de guidage 602 lorsque celles-ci sont perpendiculaires à l'axe de la paroi de tuyère 180.

Dans le mode de réalisation de la Fig. 4, chaque paroi de guidage 602 présente une extrémité libre qui permet le passage du fluide entre ladite extrémité libre et l'un des rebords 604 du capotage 202 et une extrémité fermée qui s'appuie contre le rebord 604 opposé du capotage 202 pour empêcher le passage du fluide. Pour deux parois de guidage 602 consécutives, les positions de l'extrémité libre et de l'extrémité fermée sont inversées, de manière à former ainsi des chicanes qui canalisent le fluide.

Dans le mode de réalisation de la Fig. 8, chaque paroi de guidage 602 est percée d'un passage 802 qui permet l'écoulement d'un couloir à l'autre et ici, pour deux parois de guidage 602 consécutives, les passages 802 sont diamétralement opposés par rapport à l'axe de la paroi de tuyère 180.

Les caractéristiques présentées aux Figs. 6 et 7 sont plus particulièrement présentées pour des parois de guidage 602 parallèles à l'axe de la paroi de tuyère 180, mais elles s'appliquent de la même manière pour des parois de guidage 602 perpendiculaires à l'axe de la paroi de tuyère 180.

Sur la Fig. 6, un espace 605 entre chaque paroi de guidage 602 et la paroi de tuyère 180 est prévu pour éviter les contacts entre elles. L'espace 605 est par exemple de 5 mm pour limiter la recirculation du fluide par cet espace.

Sur la Fig. 7, la paroi de tuyère 180 est équipée de nervures 702 qui s'étendent également globalement perpendiculairement par rapport au fond 606 et parallèlement aux parois de guidage 602 et chaque nervure 702 est disposée entre deux parois de guidage 602 consécutives afin de limiter encore la recirculation du fluide sous les parois de guidage 602.

## Revendications

1. Ensemble propulsif (151) pour un aéronef (100) comportant :
- une nacelle (149),
- un système de propulsion (150) arrangé à l'intérieur de la nacelle (149) et comprenant un carénage (172), une chambre de combustion (168) logée dans le carénage (172), une tuyère d'éjection (174) disposée en aval de la chambre de combustion (168) et délimitée par une portion arrière du carénage (172), dite paroi de tuyère (180), et assurant l'éjection des gaz de combustion issus de la combustion du carburant dans la chambre de combustion (168),
- un réservoir de carburant (178),
- une canalisation d'apport (176) qui relie le réservoir (178) et la chambre de combustion (168), et
- un système d'échangeur thermique (200) assurant, en fonctionnement du système de propulsion (150), un échange de calories entre les gaz chauds de combustion circulant dans la tuyère (174) et le carburant plus froid circulant dans la canalisation d'apport (176) par rayonnement thermique à travers la paroi de tuyère (180),
**caractérisé en ce que** le système d'échangeur thermique (200) comporte une portion (201) de la canalisation d'apport (176) où ladite portion (201) prend la forme d'un capotage (202) qui est fixé de manière étanche à la paroi de tuyère (180) et sur l'extérieur de celle-ci, et où le capotage (202) et la paroi de tuyère (180) définissent entre eux une chambre de chauffe (203) pour le carburant,
**en ce que** le capotage (202) est équipé de plusieurs parois de guidage (602) qui divisent la chambre de chauffe (203) en plusieurs couloirs successifs et communiquant de proche en proche,
et **en ce qu'**un espace (605) est prévu entre chaque paroi de guidage (602) et la paroi de tuyère (180).

2. Ensemble propulsif (151) selon la revendication 1, **caractérisé en ce qu'**il comporte des moyens de détection de fuite (205) prévus au niveau de ladite portion (201), une unité de contrôle (207) connectée aux moyens de détection de fuite (205) et une vanne (209) montée sur la canalisation d'apport (176) en aval de la portion (201) et commandée en ouverture et en fermeture par l'unité de contrôle (207).

3. Ensemble propulsif (151) pour un aéronef (100) comportant :
- une nacelle (149),
- un système de propulsion (150) arrangé à l'intérieur de la nacelle (149) et comprenant un carénage (172), une chambre de combustion (168) logée dans le carénage (172), une tuyère d'éjection (174) disposée en aval de la chambre de combustion (168) et délimitée par une portion arrière du carénage (172), dite paroi de tuyère (180), et assurant l'éjection des gaz de combustion issus de la combustion du carburant dans la chambre de combustion (168),
- un réservoir de carburant (178),
- une canalisation d'apport (176) qui relie le réservoir (178) et la chambre de combustion (168), et
- un système d'échangeur thermique (300) assurant, en fonctionnement du système de propulsion (150), un échange de calories entre les gaz chauds de combustion circulant dans la tuyère (174) et le carburant plus froid circulant dans la canalisation d'apport (176) par rayonnement thermique à travers la paroi de tuyère (180),
et **caractérisé en ce que** le système d'échangeur thermique (300) comporte une canalisation de circulation (304) dans laquelle circule un fluide caloporteur, une pompe (306) arrangée de manière à mettre en mouvement le fluide caloporteur dans la canalisation de circulation (304), où une portion (308) de la canalisation de circulation (304) prend la forme d'un capotage (202) qui est fixé de manière étanche à la paroi de tuyère (180) et sur l'extérieur de celle-ci, et où le capotage (202) et la paroi de tuyère (180) définissent entre eux une chambre de chauffe (203) pour le fluide caloporteur, le système d'échangeur thermique (300) comportant également un échangeur thermique (302) arrangé entre la canalisation d'apport (176) et la canalisation de circulation (304) de manière à assurer un transfert de calories du fluide caloporteur vers le carburant,
**en ce que** le capotage (202) est équipé de plusieurs parois de guidage (602) qui divisent la chambre de chauffe (203) en plusieurs couloirs successifs et communiquant de proche en proche,
et **en ce qu'**un espace (605) est prévu entre chaque paroi de guidage (602) et la paroi de tuyère (180).

4. Ensemble propulsif (151) selon l'une des revendications 1 à 3, **caractérisé en ce que** le capotage (202, 308) est réalisé dans le même matériau que la paroi de tuyère (180).

5. Ensemble propulsif (151) selon l'une des revendications 1 à 4, **caractérisé en ce que** le capotage (202) s'étend sur un secteur angulaire limité autour d'un axe de la paroi de tuyère (180).

6. Ensemble propulsif (151) selon l'une des revendications 1 à 4, **caractérisé en ce que** le capotage (202) s'étend sur tout le pourtour de la paroi de tuyère (180).

7. Ensemble propulsif (151) selon l'une des revendications 1 à 6, **caractérisé en ce que** les parois de guidage (602) sont parallèles à un axe de la paroi de tuyère (180).

8. Ensemble propulsif (151) selon l'une des revendications 1 à 6, **caractérisé en ce que** les parois de guidage (602) sont perpendiculaires à un axe de la paroi de tuyère (180).

9. Ensemble propulsif (151) selon l'une des revendications 1 à 8, **caractérisé en ce que** la paroi de tuyère (180) est équipée de nervures (702) qui s'étendent parallèlement aux parois de guidage (602) et **en ce que** chaque nervure (702) est disposée entre deux parois de guidage (602) consécutives.

10. Aéronef (100) comportant au moins un ensemble propulsif (151) selon l'une des revendications précédentes.

## Patentansprüche

1. Antriebseinheit (151) für ein Luftfahrzeug (100), umfassend:
- eine Gondel (149),
- ein Antriebssystem (150), das innerhalb der Gondel (149) angeordnet ist und Folgendes aufweist: eine Verkleidung (172), eine in der Verkleidung (172) angeordnete Brennkammer (168) und eine Ausstoßdüse (174), die stromabwärts der Brennkammer (168) angeordnet ist, durch einen als Düsenwand (180) bezeichneten hinteren Abschnitt der Verkleidung (172) begrenzt wird und den Ausstoß der aus der Verbrennung des Treibstoffs in der Brennkammer (168) kommenden Verbrennungsgase gewährleistet,
- einen Kraftstofftank (178),
- eine Zufuhrleitung (176), die den Tank (178) und die Brennkammer (168) verbindet, und
- ein Wärmetauschersystem (200), das bei Betrieb des Antriebssystems (150) einen Wärmetausch zwischen den in der Düse (174) zirkulierenden heißen Verbrennungsgasen und dem in der Zufuhrleitung (176) zirkulierenden kälteren Treibstoff durch Wärmestrahlung über die Düsenwand (180) gewährleistet,
**dadurch gekennzeichnet, dass** das Wärmetauschersystem (200) einen Abschnitt (201) der Zufuhrleitung (176) aufweist, wobei der Abschnitt (201) die Form einer Abdeckung (202) annimmt, die dicht an der Düsenwand (180) und an der Außenseite derselben befestigt ist, und wobei die Abdeckung (202) und die Düsenwand (180) zwischeneinander eine Heizkammer (203) für den Treibstoff definieren,
dass die Abdeckung (202) mit mehreren Führungswänden (602) ausgestattet ist, die die Heizkammer (203) in mehrere aufeinanderfolgende und miteinander verbundene Gänge unterteilen,
und dass zwischen jeder Führungswand (602) und der Düsenwand (180) ein Raum (605) vorgesehen ist.

2. Antriebseinheit (151) nach Anspruch 1, **dadurch gekennzeichnet, dass** sie Folgendes aufweist: Leckerkennungsmittel (205), die am Abschnitt (201) vorgesehen sind, eine mit den Leckerkennungsmitteln (205) verbundene Steuereinheit (207) und ein Ventil (209), das an der Zufuhrleitung (176) stromabwärts des Abschnitts (201) montiert ist und dessen Öffnen und Schließen durch die Steuereinheit (207) gesteuert wird.

3. Antriebseinheit (151) für ein Luftfahrzeug (100), umfassend:
- eine Gondel (149),
- ein Antriebssystem (150), das innerhalb der Gondel (149) angeordnet ist und Folgendes aufweist: eine Verkleidung (172), eine in der Verkleidung (172) angeordnete Brennkammer (168) und eine Ausstoßdüse (174), die stromabwärts der Brennkammer (168) angeordnet ist, durch einen als Düsenwand (180) bezeichneten hinteren Abschnitt der Verkleidung (172) begrenzt wird und den Ausstoß der aus der Verbrennung des Treibstoffs in der Brennkammer (168) kommenden Verbrennungsgase gewährleistet,
- einen Kraftstofftank (178),
- eine Zufuhrleitung (176), die den Tank (178) und die Brennkammer (168) verbindet, und
- ein Wärmetauschersystem (300), das bei Betrieb des Antriebssystems (150) einen Wärmetausch zwischen den in der Düse (174) zirkulierenden heißen Verbrennungsgasen und dem in der Zufuhrleitung (176) zirkulierenden kälteren Treibstoff durch Wärmestrahlung über die Düsenwand (180) gewährleistet,
**dadurch gekennzeichnet, dass** das Wärmetauschersystem (300) Folgendes aufweist: eine Zirkulationsleitung (304), in der ein Wärmeträgerfluid zirkuliert, und eine Pumpe (306), die so angeordnet ist, dass sie das Wärmeträgerfluid in der Zirkulationsleitung (304) in Bewegung versetzt, wobei der Abschnitt (308) der Zirkulationsleitung (304) die Form einer Abdeckung (202) annimmt, die dicht an der Düsenwand (180) und an der Außenseite derselben befestigt ist, und wobei die Abdeckung (202) und die Düsenwand (180) zwischeneinander eine Heizkammer (203) für das Wärmeträgerfluid definieren, wobei das Wärmetauschersystem (300) außerdem einen Wärmetauscher (302) aufweist, der zwischen der Zufuhrleitung (176) und der Zirkulationsleitung (304) angeordnet ist, um eine Wärmeübertragung vom Wärmeträgerfluid auf den Treibstoff zu gewährleisten, dass die Abdeckung (202) mit mehreren Führungswänden (602) ausgestattet ist, die die Heizkammer (203) in mehrere aufeinanderfolgende und miteinander verbundene Gänge unterteilen,
und dass zwischen jeder Führungswand (602) und der Düsenwand (180) ein Raum (605) vorgesehen ist.

4. Antriebseinheit (151) nach einem der Ansprüche 1 bis 3, **dadurch gekennzeichnet, dass** die Abdeckung (202, 308) aus demselben Material wie die Düsenwand (180) gefertigt ist.

5. Antriebseinheit (151) nach einem der Ansprüche 1 bis 4, **dadurch gekennzeichnet, dass** sich die Abdeckung (202) über einen begrenzten Winkelsektor um die Achse der Düsenwand (180) herum erstreckt.

6. Antriebseinheit (151) nach einem der Ansprüche 1 bis 4, **dadurch gekennzeichnet, dass** sich die Abdeckung (202) über den gesamten Umfang der Düsenwand (180) erstreckt.

7. Antriebseinheit (151) nach einem der Ansprüche 1 bis 6, **dadurch gekennzeichnet, dass** die Führungswände (602) parallel zu einer Achse der Düsenwand (180) verlaufen.

8. Antriebseinheit (151) nach einem der Ansprüche 1 bis 6, **dadurch gekennzeichnet, dass** die Führungswände (602) senkrecht zu einer Achse der Düsenwand (180) verlaufen.

9. Antriebseinheit (151) nach einem der Ansprüche 1 bis 8, **dadurch gekennzeichnet, dass** die Düsenwand (180) mit Rippen (702) ausgestattet ist, die sich parallel zu den Führungswänden (602) erstrecken, und dass jede Rippe (702) zwischen zwei aufeinanderfolgenden Führungswänden (602) angeordnet ist.

10. Luftfahrzeug (100) mit mindestens einer Antriebseinheit (151) nach einem der vorangehenden Ansprüche umfasst.

## Claims

1. Propulsion assembly (151) for an aircraft (100), having:
- a nacelle (149),
- a propulsion system (150) arranged inside the nacelle (149) and comprising a fairing (172), a combustion chamber (168) housed in the fairing (172), an exhaust nozzle (174) positioned downstream of the combustion chamber (168) and delimited by a rear portion of the fairing (172), referred to as the nozzle wall (180), and ensuring the discharge of the combustion gases originating from the combustion of the fuel in the combustion chamber (168),
- a fuel tank (178),
- a supply duct (176) which connects the tank (178) and the combustion chamber (168), and
- a heat exchanger system (200) ensuring, during operation of the propulsion system (150), an exchange of heat energy between the hot combustion gases circulating in the nozzle (174) and the colder fuel circulating in the supply duct (176) by thermal radiation through the nozzle wall (180),
**characterized in that** the heat exchanger system (200) has a portion (201) of the supply duct (176), wherein said portion (201) takes the form of a cowling (202) which is sealingly fixed to the nozzle wall (180) and on the outside thereof, and wherein the cowling (202) and the nozzle wall (180) define between them a heating chamber (203) for the fuel,
**in that** the cowling (202) is fitted with multiple guiding walls (602) which divide the heating chamber (203) into multiple successive corridors communicating one with the next,
and **in that** a space (605) is provided between each guiding wall (602) and the nozzle wall (180).

2. Propulsion assembly (151) according to Claim 1, **characterized in that** it has leak detection means (205) provided at said portion (201), a control unit (207) connected to the leak detection means (205), and a valve (209) mounted on the supply duct (176) downstream of the portion (201) and made to open and close by the control unit (207).

3. Propulsion assembly (151) for an aircraft (100), having:
- a nacelle (149),
- a propulsion system (150) arranged inside the nacelle (149) and comprising a fairing (172), a combustion chamber (168) housed in the fairing (172), an exhaust nozzle (174) positioned downstream of the combustion chamber (168) and delimited by a rear portion of the fairing (172), referred to as the nozzle wall (180), and ensuring the discharge of the combustion gases originating from the combustion of the fuel in the combustion chamber (168),
- a fuel tank (178),
- a supply duct (176) which connects the tank (178) and the combustion chamber (168), and
- a heat exchanger system (300) ensuring, during operation of the propulsion system (150), an exchange of heat energy between the hot combustion gases circulating in the nozzle (174) and the colder fuel circulating in the supply duct (176) by thermal radiation through the nozzle wall (180),
and **characterized in that** the heat exchanger system (300) has a circulation duct (304) in which a heat transfer fluid circulates, a pump (306) arranged so as to move the heat transfer fluid in the circulation duct (304), wherein a portion (308) of the circulation duct (304) takes the form of a cowling (202) which is sealingly fixed to the nozzle wall (180) and on the outside thereof, and wherein the cowling (202) and the nozzle wall (180) define between them a heating chamber (203) for the heat transfer fluid, the heat exchanger system (300) also having a heat exchanger (302) arranged between the supply duct (176) and the circulation duct (304) so as to ensure a transfer of heat energy from the heat transfer fluid to the fuel,
**in that** the cowling (202) is fitted with multiple guiding walls (602) which divide the heating chamber (203) into multiple successive corridors communicating one with the next,
and **in that** a space (605) is provided between each guiding wall (602) and the nozzle wall (180).

4. Propulsion assembly (151) according to one of Claims 1 to 3, **characterized in that** the cowling (202, 308) is made of the same material as the nozzle wall (180).

5. Propulsion assembly (151) according to one of Claims 1 to 4, **characterized in that** the cowling (202) extends over an angular sector that is limited about an axis of the nozzle wall (180).

6. Propulsion assembly (151) according to one of Claims 1 to 4, **characterized in that** the cowling (202) extends over the entire perimeter of the nozzle wall (180).

7. Propulsion assembly (151) according to one of Claims 1 to 6, **characterized in that** the guiding walls (602) are parallel to an axis of the nozzle wall (180).

8. Propulsion assembly (151) according to one of Claims 1 to 6, **characterized in that** the guiding walls (602) are perpendicular to an axis of the nozzle wall (180).

9. Propulsion assembly (151) according to one of Claims 1 to 8, **characterized in that** the nozzle wall (180) is fitted with ribs (702) which extend parallel to the guiding walls (602), and **in that** each rib (702) is positioned between two consecutive guiding walls (602).

10. Aircraft (100) having at least one propulsion assembly (151) according to one of the preceding claims.
